# EUROPEAN PATENT SPECIFICATION

(11) **EP 4 201 576 B1**
(45) Date of publication and mention of the grant of the patent: **05.03.2025**
(21) Application number: 21217133.4
(22) Date of filing: 22.12.2021
(51) Int. Cl.: B23K 26/046, B23K 26/142, B23K 26/14, B23K 26/40, B23K 26/70, B23K 26/38, B23K 103/04

(54) **METHOD FOR LASER REACTIVE CUTTING A THICK METAL WORKPIECE; CORRESPONDING MACHINE**
VERFAHREN ZUM LASER REAKTIVEN SCHNEIDEN EINES DICKEN METALLWERKSTÜCKS; ENTSPRECHENDE MASCHINE
PROCÉDÉ DE DÉCOUPE RÉACTIVE AU LASER D'UNE PIÈCE MÉTALLIQUE ÉPAISSE ; MACHINE CORRESPONDANTE

(43) Date of publication of application: 28.06.2023
(73) Proprietor: Bystronic Laser AG, 3362 Niederönz (CH)
(72) Inventor: WORATZ, Colin, 3012 Bern (CH)
(74) Representative: Frei Patent Attorneys

(56) References cited:
- DE-A1- 4 215 561
- JP-A- 2005 081 394
- US-A- 5 651 904
- US-A1- 2020 254 570

## Description

The invention is in the field of laser cutting of workpieces, and more particularly to a method for laser reactive cutting a metal workpiece having a thickness of at least 10 mm, and to a machine for laser reactive cutting, see claims 1 and 15.

### BACKGROUND OF THE INVENTION

In laser cutting of metal workpieces, a directed laser beam moves relative to the metal workpiece to locally create a cut in the metal material at the position of incidence of the laser beam on the workpiece. Modern laser cutting machines also direct a gas jet onto the position of incidence of the laser beam. If this gas ("assist gas", "cutting gas") contains a substantial portion of oxygen, and a chemical reaction ("burning") takes place at the position of incidence, the laser cutting is also called "reactive cutting" or "flame cutting".

Reactive cutting features the advantage that relatively thick workpieces may be cut using laser beams of moderate laser power. A disadvantage is that despite the efficiency of the process the cutting speed is limited in practice if a good quality of the cut is desired. Also, generally the quality of the cut (the "kerf") is an issue in reactive cutting, especially if a substantial burr is to be avoided; also, sometimes in flame cutting, the material quality is compromised near the kerf.

There is an ongoing need for improvements of the cutting process, both, in terms of quality and in terms of cutting speed. One possibility to influence the cutting process is the variation of cutting parameters. Cutting parameters in addition to the laser power and the cutting speed (velocity of the laser beam relative to the workpiece) comprise the gas pressure, the nozzle diameter (diameter of the nozzle through which the cutting gas is directed onto the workpiece, the distance between the nozzle and the workpiece, the location of the beam focus, the diameter of the spot, the diameter of the laser fiber (if the laser is a fiber laser), in addition to the thickness of the workpiece to be cut.

In WO 2009/007708 A2 it has been proposed to use, for relatively thin workpieces of 2 mm or 1 mm, a laser beam whose focal position is substantially above the surface of the workpiece, for example at a distance of 4-5 mm, while the beam divergence is lower than in standard laser cutting set-ups. For thicker workpieces, the art generally proposes beams with focal positions at the workpiece surface or slightly below the workpiece surface. WO 2021/032355 A1 suggests to use, for thicker workpieces of at least 10 mm, a laser beam whose focal position is located in the workpiece in a depth that is greater than half of the thickness of the workpiece. WO 2021/032355 A1 teaches to do so together with using a cutting-gas nozzle that has a distance from the workpiece surface amounting to at least 2 mm, preferably more.

DE4215561 A1 (describing the preamble of claims 1 and 15) and US 5,651,904 A disclose a metal sheet cutting method that comprises preheating, without melting, the surface of the workpiece to a temperature and then carrying out a reactive cutting step by blowing combustible gas onto the preheated section while a laser beam impinges. Thereby, these documents teach a combination of an "autogenous gas cutting process" with reactive laser beam cutting. The taught parameters include a workpiece thickness of 50 mm and a focal position of 3 mm above the workpiece.

US 2020/0254570 discloses a laser cutting method. D2 deals with so-called anoxic cutting, thus cutting without oxygen, especially with very pure nitrogen as assist gas. JP2005081394 concerns laser cutting of a wire.

### SUMMARY OF THE INVENTION

It is an object of the present invention to provide a method for laser cutting and a machine for laser cutting overcoming drawbacks of prior art methods. It is especially an object to provide an effective and efficient laser reactive cutting method and a laser cutting machine suitable for reactive cutting of relatively thick workpieces having a thickness between 10 mm and 60 mm, especially a thickness of at least 15 mm, for example of between 20 mm and 40 mm or between 20 mm and 30 mm.

This object is achieved by a method and a machine as defined in the independent claims 1 and 15.

It has been found that cutting such relatively thick workpieces, especially of steel, with an oxygen containing cutting gas is more efficient compared to the prior art if the focal position is substantially above the workpiece ('above' the workpiece means 'at a distance from the one surface of the workpiece that faces towards the direction from which the laser beam impinges'; in most set-ups, the workpiece will lie on a working table, and the laser cutting head will be above the workpiece in the literal sense of the word 'above'; however, the present invention is also applicable in hypothetical situations in which the laser beam is not directed into a downward direction with respect to the direction of gravity). In accordance with the claimed invention, the focal position is at a distance of between 10 mm and 30 mm from the workpiece, wherein the laser beam has a power of at least 5 kW. An especially preferred range for the focal position has been found to be between 10 mm and 20 mm above the workpiece, especially between 12 mm and 16 mm.

It has further been found that the cutting process of relatively thick workpieces results, compared to the prior art, in a better cutting quality if used for material of inferior quality if the focal position is substantially above the workpiece, optionally in combination with other cutting parameters mentioned in the present text hereinafter.

In a group of embodiments, the distance between the focal position and the workpiece is smaller than a thickness of the workpiece, i.e., the focal position is closer to the workpiece surface facing the laser head than the opposed workpiece surface.

It has further been found that a focal position above the workpiece surface is especially beneficial if a nozzle is used that is relatively close to the workpiece. Especially, the distance of the laser machining nozzle from the workpiece (meaning the distance between the nozzle outlet, i.e. the lowermost portion of the nozzle, to the workpiece surface) may be smaller than the distance of the focal position to the workpiece, so that the focal position is within the nozzle or elsewhere more towards the laser source than the position of the nozzle outlet. Especially, the nozzle outlet may be at a distance between 0 (i.e. physical contact between the nozzle and the workpiece) and 1 mm, especially between 0 or 0.1 mm and 0.5 mm, for example between 0.13 mm and 0.3 mm or between 0.15 mm and 0.25 mm. Also, relatively low cutting gas pressures of for example between 1 bar or 1.5 bar and 5 bar, especially between 2 bar and 4 bar, for example between 2.2 bar and 3 bar may be used.

A diameter of the nozzle may be between 0.4 mm and 1.8 mm, especially between 0.5 mm and 1.3 mm or between 0.9 mm and 1.1 mm.

The laser cutting gas contains oxygen. Especially, it may be oxygen (industrial quality) or be a gas mixture having an oxygen content greater than air (i.e. 22% or more). Also other gas mixtures with a substantial oxygen content (meaning for example at least 1% oxygen), especially an oxygen content of at least 5% are possible.

A diameter of the laser beam at the focal position may be between 0.1 mm and 1.5 mm, especially between 0.2 mm and 0.8 mm, especially between 0.35 mm and 0.6 mm.

The fiber used for conducting the laser beam to the laser cutting head may have a diameter (core diameter) of between 100 µm and 400 µm.

It has further been found to be beneficial if the workpiece has a coating of an oxide scale layer, at least at positions where the cut is to be created. The coating may be at least on the upper side of the workpiece (the side facing towards the direction from which the laser impinges).

In embodiments, the laser machining nozzle is cooled, especially by an actively conveyed cooling fluid, especially by liquid cooling (water cooling). To this end, it may comprise one or more cooling channels for a cooling liquid to circulate, as well as ports for injecting the cooling liquid and for discharging it. In addition or as an alternative, the laser cutting head may comprise a cooled nozzle carrier carrying the nozzle and having a thermal contact with the nozzle. Such a cooled nozzle carrier may comprise one or more cooling channels for a cooling liquid to circulate and ports for injecting the cooling liquid and to discharge it. The cooling liquid may be cooling water or any other suitable cooling liquid.

The method may in special embodiments comprise cutting a pattern into the workpiece, which pattern comprises distinct cuts that are at a distance of at most 4 mm, especially at most 3 mm from each other, so that bridges (webs) between the cuts of these dimensions arise, the webs between the cuts having an aspect ratio (thickness-to-width ratio) of for example 5 or more, especially of around 10 or even more may result. Especially, the cuts may have portions essentially parallel to each other (parallel in the present context is not restricted to straight lines, rather, to not-straight lines being at a constant distance from each other are considered 'parallel'), with the parallel cuts being at a distance of at most 4 mm or at most 3 mm.

In addition to concerning a method, the present invention also concerns a machine.

The machine is a laser cutting machine and comprises a laser cutting head, a laser source and a workpiece support, es well as a supply for an oxygen containing cutting gas that is emitted from a laser machining nozzle of the laser cutting head. The laser cutting machine may comprise parameters, stored in a memory to which a machine control software has access, for cutting workpieces of a thickness between 10 mm and 60 mm, for example at least 15 mm, for example of steel. These parameters comprise parameters that cause the machine to generate the laser beam with a focal position of between 10 mm and 30 mm above the workpiece and may comprise any ones of the parameters discussed in the present text. Thus, the machine is programmed to carry out the method according to any embodiment described and claimed in this text.

Especially, the machine may be equipped and programmed to carry out the method as described in the present text.

### BRIEF DESCRIPTION OF THE DRAWINGS

Hereinafter, embodiments of the present invention are described in more detail referring to drawings. The drawings are schematic and not to scale. In the drawings, same reference numbers refer to same or similar components. They show:
- Fig. 1:: A laser cutting machine; and
- Fig. 2: A laser cutting head.

### DESCRIPTION OF THE PREFERRED EMBODIMENTS

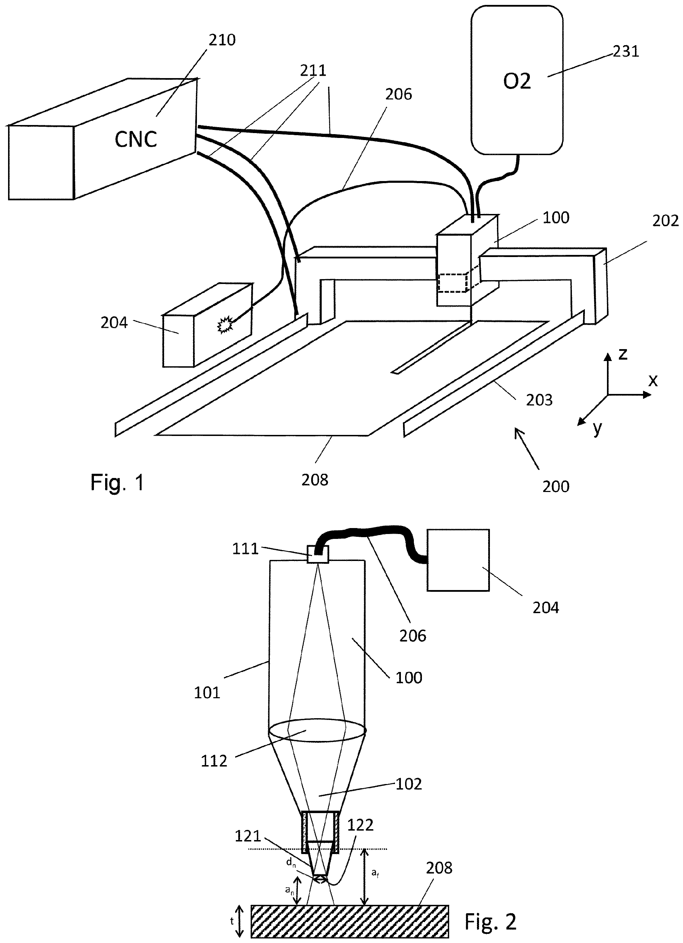

**Figure 1** shows an example of a laser cutting machine 200. The machine comprises a laser source 204 and a transport fiber 206, a laser cutting head 100, and a laser head moving mechanism. A workpiece 208 is supported by a working table (not shown). The laser cutting head moving mechanism comprises a bridge 202 relative to which the laser cutting head 100 is movable in x direction, and which itself is movable, for example on a pair or rails 203, in y direction relative to the working table and the workpiece 208. Also a movement of the laser head or of a component thereof (for example the nozzle and/or an optics unit) in the z-direction being the direction perpendicular to the workpiece surface and usually being the vertical direction may in embodiments be possible. The machine further comprises a machine control unit 210 with data lines 211 to the components of the movement mechanism and possibly to further units of the laser cutting machine (such as the laser source, a gas supply control, a cooling unit (not shown), etc.) . Alternatively, the laser cutting machine may be laser tube cutting machine with mandrels for fixing and guiding a workpiece.

The workpiece 208 may be a metal sheet, especially a steel plate, that is cut by a laser beam emitted by the laser cutting head 100. Alternatively, the workpiece may be a metal tube.

An oxygen gas supply comprises an oxygen tank 231 and a flexible oxygen pipe 232 as well as a gas supply control, and is equipped to supply oxygen gas to the laser cutting head 100 to be ejected to impinge on the position of incidence of the laser beam on the workpiece.

**Figure 2** schematically show an example of the laser cutting head 100. The laser cutting head comprises an interface 111 for the laser source 204, a laser head body 101 that contains a beam shaping installation 112 for shaping the laser beam 102 in a desired manner and, at a workpiece-side end (the lower end in the depicted orientation in which the laser acts from above the workpiece 208), a nozzle 121, namely a laser machining nozzle. The nozzle 121 may optionally be mounted in a manner that its z position can be varied relative to the laser head body 101 so that a nozzle-outlet-to-workpiece distance an is an adjustable parameter (nozzle outlet 122). In addition or as an alternative, the laser head body 101 or a lower portion of the laser head may have an adjustable z-position to adjust the nozzle-outlet-to-workpiece distance aₙ.

The focal position is at a distance a_{f} from the workpiece surface, which distance a_{f} is illustrated to be greater than the nozzle-outlet-to-workpiece distance aₙ so that the focus of the laser beam is above the nozzle outlet, i.e. within the nozzle or other part of the laser cutting head. The diameter of the nozzle outlet is denoted by dₙ, and the thickness of the workpiece 208 is denoted by t in Fig. 2.

**Example:** The following parameters were used: Nozzle diameter dₙ: 1 mm, nozzle-outlet-to-workpiece distance aₙ: 0.2 mm, focal position distance to workpiece (above focal position above workpiece) ar: 14 mm, beam diameter at focal position: 0.3 mm, gas pressure: 2.5 bar, laser power: 10 kW, fiber diameter: 100 µm, with a magnification factor of 2.8; cutting gas: O₂ (industrial). These parameters have allowed to increase the cutting speed for a 20 mm thick sheet of structural steel to 1700 mm/min (compared to between 1000 mm/min and 1370 mm/min, depending on the coating, for alternative parameters). With the same parameters, for a steel plate (structural steel) of 30 mm thickness, the achieved cutting speed was 1250 mm/min, compared to 630-810 mm/min for prior art parameters.

If the laser power is increased to more than 10 kW, the cutting speed may accordingly be raised also.

The above-mentioned comparative tests for a 20 mm metal sheet were carried out using the following parameters:
- Power: 10 kW, Focal position distance to workpiece a_{f}: 7 mm ;Nozzle distance: 1.3mm, Nozzle diameter 1.7 mm, O2 pressure 0.7 bar, Feed rate (cutting speed) 1370 mm/min; Beam Shaper OHC
- Power: 5.8 kW, Focal position distance to workpiece a_{f}: 7 mm, Nozzle distance: 1.3 mm, Nozzle diameter 1.7mm, O2 pressure 0.7 bar, Feed rate 1050 mm/min; Beam Shaper OHC
- Power: 5.2 kW, Focal position distance to workpiece a_{f}: 7 mm, Nozzle distance: 0.3 mm, Nozzle diameter 1.7 mm, O2 pressure 0.6 bar, Feed rate 1000 mm/min; No Beam Shaper.

The mentioned Beam Shaper is a Beam-shaping element that creates a "Donut"-beam (cross section with intensity maxima on a ring around the center instead of in the center) out of a Gaussian beam. When prior art parameters are used, such a beam shaper is necessary to cut comparably thick workpieces. Given the approach according to the present invention, a beam shaper becomes optional also for thick workpieces of for example 30 mm thickness.

In addition, the parameter range has also proven to be beneficial especially for cutting sheets of inferior material quality. Moreover, it has proven to be beneficial for cutting complex contours and structures. Especially, extended and complex structures having a width (extension in x- and/or y-direction) of as low as 3 mm or less for a thickness of 30 mm could be cut using these parameters at excellent quality. Thus, aspect ratios of cut parts of 10 or more are readily attainable. A reason for this may be that the overall heat input is reduced compared to the prior art in that the cutting speed may be enhanced or the laser power may be reduced due to the cutting parameters used according to the invention.

Generally, the parameter ranged described in the present invention as defined in the appended claims allow for an increased cutting speed for a given workpiece thickness or increased workpiece thicknesses for a given cutting speed. In embodiments, the method is carried out without the use of any additional beam shaper.

## Claims

1. A method of laser reactive cutting a metal workpiece having a thickness of between 10 mm and 60 mm, the method comprising the steps of providing the workpiece (208) having the thickness (t) of between 10 mm and 60 mm, of causing a laser beam to impinge on the workpiece (208) while the laser beam is moved relative to the workpiece and while a cutting gas containing oxygen is ejected from a laser machining nozzle (121) and is thereby directed onto a position of incidence of the laser beam on the workpiece, **characterized in that** a focal position of the laser beam is at a distance (a_{f}) of between 10 mm and 30 mm from the workpiece (208), and **in that** the laser beam has a power of at least 5 kW.

2. The method according to claim 1, wherein a distance (aₙ) of the laser machining nozzle (121) from the workpiece (208) is smaller than the distance of the focal position of the laser beam from the workpiece (208).

3. The method according to claim 1 or 2, wherein the distance (a_{f}) of the focal position of the laser beam from the workpiece (208) is between 10 mm and 20 mm.

4. The method according to any one of the previous claims, wherein the distance (aₙ) of the laser machining nozzle (121) from the workpiece (208) is between 0 and 1 mm.

5. The method according to any one of the previous claims, wherein a diameter (dₙ) of an outlet of the laser machining nozzle (121) is between 0.4 mm and 1.8 mm, especially between 0.5 mm and 1.3 mm or between 0.9 mm and 1.1 mm.

6. The method according to any one of the previous claims, wherein a gas pressure of the cutting gas supplied to the laser machining nozzle (121) is between 1 bar and 5 bar, especially between 2 bar and 4 bar.

7. The method according to any one of the previous claims, wherein the cutting gas contains at least 5% oxygen, especially at least 22% oxygen, wherein preferably the cutting gas is industrial oxygen.

8. The method according to any one of the previous claims, wherein a diameter of the laser beam at the focal position is between 0.2 mm and 0.8 mm, especially between 0.35 mm and 0.6 mm.

9. The method according to any one of the previous claims, wherein the workpiece (208) is a steel plate.

10. The method according to any one of the previous claims, wherein the workpiece has a thickness of between 20 mm and 30 mm.

11. The method according to any one of the previous claims, wherein the workpiece is coated by an oxide scale layer.

12. The method according to any one of the previous claims, wherein the laser beam has a power of at least 10 kW or at least 12 kW.

13. The method according to any one of the previous claims, comprising moving the laser beam relative to the workpiece (208) to make two adjacent cuts at a distance of at most 4 mm from each other.

14. The method according to any one of the previous claims, and comprising the further step of actively cooling the laser machining nozzle (121) by an actively conveyed cooling fluid.

15. A machine (200) for laser reactive cutting, the machine (200) comprising a laser cutting head (100), a laser source (204), and a workpiece support, the laser cutting machine (200) further comprising a machine control unit (210) configured to cause the laser cutting head (100) to undergo a movement relative to the workpiece support while a laser beam is emitted from the laser cutting head for making a controlled cut in a workpiece (208) supported by the workpiece support, the laser cutting head (100) comprising a laser machining nozzle (121) equipped to eject a jet of a cutting gas jet onto the workpiece (208), and the laser cutting machine (200) further comprising a gas tank of the cutting gas for supplying the cutting gas to the laser machining nozzle (121), the cutting gas comprising oxygen, **characterized in that** a memory is provided, and **in that** the machine control unit (210) has access to the memory that comprises stored parameters so that the laser cutting machine is equipped and programmed to carry out the method according to any one of the previous claims.

## Patentansprüche

1. Verfahren zum reaktiven Laserschneiden eines Metallwerkstücks mit einer Dicke zwischen 10 mm und 60 mm, wobei das Verfahren die Schritte des Bereitstellens des Werkstücks (208) mit einer Dicke (t) zwischen 10 mm und 60 mm, des Veranlassens des Auftreffens eines Laserstrahls auf das Werkstück (208), während der Laserstrahl relativ zu dem Werkstück bewegt wird und während ein sauerstoffhaltiges Schneidgas aus einer Laserbearbeitungsdüse (121) ausgestoßen und dadurch auf eine Einfallsposition des Laserstrahls auf das Werkstück gelenkt wird, **dadurch gekennzeichnet, dass** eine Brennpunktposition des Laserstrahls in einem Abstand (a_{f}) zwischen 10 mm und 30 mm von dem Werkstück (208) liegt und dass der Laserstrahl eine Leistung von mindestens 5 kW aufweist.

2. Verfahren nach Anspruch 1, wobei ein Abstand (aₙ) der Laserbearbeitungsdüse (121) von dem Werkstück (208) kleiner ist als der Abstand der Brennpunktposition des Laserstrahls von dem Werkstück (208).

3. Verfahren nach Anspruch 1 oder 2, wobei der Abstand (a_{f}) der Brennpunktposition des Laserstrahls von dem Werkstück (208) zwischen 10 mm und 20 mm beträgt.

4. Verfahren nach einem der vorhergehenden Ansprüche, wobei der Abstand (aₙ) der Laserbearbeitungsdüse (121) von dem Werkstück (208) zwischen 0 und 1 mm beträgt.

5. Verfahren nach einem der vorhergehenden Ansprüche, wobei ein Durchmesser (dₙ) eines Auslasses der Laserbearbeitungsdüse (121) zwischen 0,4 mm und 1,8 mm, insbesondere zwischen 0,5 mm und 1,3 mm oder zwischen 0,9 mm und 1,1 mm, beträgt.

6. Verfahren nach einem der vorhergehenden Ansprüche, wobei ein Gasdruck des der Laserbearbeitungsdüse (121) zugeführten Schneidgases zwischen 1 bar und 5 bar, insbesondere zwischen 2 bar und 4 bar beträgt.

7. Verfahren nach einem der vorhergehenden Ansprüche, wobei das Schneidgas mindestens 5 % Sauerstoff, insbesondere mindestens 22 % Sauerstoff enthält, wobei das Schneidgas vorzugsweise Industriesauerstoff ist.

8. Verfahren nach einem der vorhergehenden Ansprüche, wobei ein Durchmesser des Laserstrahls an der Brennpunktposition zwischen 0,2 mm und 0,8 mm, insbesondere zwischen 0,35 mm und 0,6 mm beträgt.

9. Verfahren nach einem der vorhergehenden Ansprüche, wobei das Werkstück (208) eine Stahlplatte ist.

10. Verfahren nach einem der vorhergehenden Ansprüche, wobei das Werkstück eine Dicke zwischen 20 mm und 30 mm aufweist.

11. Verfahren nach einem der vorhergehenden Ansprüche, wobei das Werkstück mit einer Oxidschicht beschichtet wird.

12. Verfahren nach einem der vorhergehenden Ansprüche, wobei der Laserstrahl eine Leistung von mindestens 10 kW oder mindestens 12 kW aufweist.

13. Verfahren nach einem der vorhergehenden Ansprüche, umfassend das Bewegen des Laserstrahls relativ zu dem Werkstück (208), um zwei benachbarte Schnitte in einem Abstand von höchstens 4 mm zueinander auszuführen.

14. Verfahren nach einem der vorhergehenden Ansprüche, umfassend den weiteren Schritt des aktiven Kühlens der Laserbearbeitungsdüse (121) durch eine aktiv geförderte Kühlflüssigkeit.

15. Maschine (200) zum reaktiven Laserschneiden, wobei die Maschine (200) einen Laserschneidkopf (100), eine Laserquelle (204) und einen Werkstückträger umfasst, wobei die Laserschneidmaschine (200) ferner eine Maschinensteuereinheit (210) umfasst, die dazu konfiguriert ist, den Laserschneidkopf (100) zu veranlassen, eine Bewegung relativ zu dem Werkstückträger auszuführen, während ein Laserstrahl von dem Laserschneidkopf emittiert wird, um einen kontrollierten Schnitt in einem von dem Werkstückträger getragenen Werkstück (208) durchzuführen, wobei der Laserschneidkopf (100) eine Laserbearbeitungsdüse (121) umfasst, die zum Ausstoßen eines Strahls eines Schneidgasstrahls auf das Werkstück (208) eingerichtet ist, und die Laserschneidmaschine (200) ferner einen Gastank für das Schneidgas zum Zuführen des Schneidgases zu der Laserbearbeitungsdüse (121) umfasst, wobei das Schneidgas Sauerstoff umfasst, **dadurch gekennzeichnet, dass** ein Speicher bereitgestellt ist und dass die Maschinensteuereinheit (210) Zugriff auf den Speicher hat, der gespeicherte Parameter umfasst, so dass die Laserschneidmaschine eingerichtet und programmiert ist, um das Verfahren nach einem der vorhergehenden Ansprüche auszuführen.

## Revendications

1. Procédé de découpe réactive au laser d'une pièce métallique ayant une épaisseur comprise entre 10 mm et 60 mm, le procédé comprenant les étapes de fourniture de la pièce (208) ayant l'épaisseur (t) comprise entre 10 mm et 60 mm, de provoquer l'impact d'un faisceau laser sur la pièce (208) pendant que le faisceau laser est déplacé par rapport à la pièce et pendant qu'un gaz de coupe contenant de l'oxygène est éjecté d'une buse d'usinage laser (121) et est ainsi dirigé sur une position d'incidence du faisceau laser sur la pièce, **caractérisé en ce qu'**une position focale du faisceau laser est à une distance (a_{f}) comprise entre 10 mm et 30 mm de la pièce (208), et **en ce que** le faisceau laser a une puissance d'au moins 5 kW.

2. Procédé selon la revendication 1, dans lequel une distance (aₙ) entre la buse d'usinage laser (121) et la pièce (208) est inférieure à la distance entre la position focale du faisceau laser et la pièce (208).

3. Procédé selon la revendication 1 ou 2, dans lequel la distance (a_{f}) entre la position focale du faisceau laser et la pièce (208) est comprise entre 10 mm et 20 mm.

4. Procédé selon l'une quelconque des revendications précédentes, dans lequel la distance (aₙ) entre la buse d'usinage laser (121) et la pièce (208) est comprise entre 0 mm et 1 mm.

5. Procédé selon l'une quelconque des revendications précédentes, dans lequel un diamètre (dₙ) d'une sortie de la buse d'usinage laser (121) est compris entre 0,4 mm et 1,8 mm, notamment entre 0,5 mm et 1,3 mm ou entre 0,9 mm et 1,1 mm.

6. Procédé selon l'une quelconque des revendications précédentes, dans lequel une pression de gaz du gaz de coupe fourni à la buse d'usinage laser (121) est comprise entre 1 bar et 5 bar, notamment entre 2 bar et 4 bar.

7. Procédé selon l'une quelconque des revendications précédentes, dans lequel le gaz de coupe contient au moins 5 % d'oxygène, notamment au moins 22 % d'oxygène, dans lequel, de préférence, le gaz de coupe est de l'oxygène industriel.

8. Procédé selon l'une quelconque des revendications précédentes, dans lequel un diamètre du faisceau laser à la position focale est compris entre 0,2 mm et 0,8 mm, notamment entre 0,35 mm et 0,6 mm.

9. Procédé selon l'une quelconque des revendications précédentes, dans lequel la pièce (208) est une plaque d'acier.

10. Procédé selon l'une quelconque des revendications précédentes, dans lequel la pièce a une épaisseur comprise entre 20 mm et 30 mm.

11. Procédé selon l'une quelconque des revendications précédentes, dans lequel la pièce est revêtue d'une couche de calamine.

12. Procédé selon l'une quelconque des revendications précédentes, dans lequel le faisceau laser a une puissance d'au moins 10 kW ou d'au moins 12 kW.

13. Procédé selon l'une quelconque des revendications précédentes, comprenant le déplacement du faisceau laser par rapport à la pièce (208) pour réaliser deux découpes adjacentes à une distance d'au plus 4 mm l'une de l'autre.

14. Procédé selon l'une quelconque des revendications précédentes, et comprenant l'étape supplémentaire consistant à refroidir activement la buse d'usinage laser (121) par un fluide de refroidissement transporté activement.

15. Machine (200) de découpe laser oxygaz, la machine (200) comprenant une tête de découpe laser (100), une source laser (204) et un porte-pièce, la machine de découpe laser (200) comprenant en outre une unité de commande de machine (210) conçue pour amener la tête de découpe laser (100) à être animée d'un mouvement par rapport au porte-pièce tandis qu'un faisceau laser est émis depuis la tête de découpe laser pour réaliser une découpe commandée dans une pièce (208) supportée par le porte-pièce, la tête de découpe laser (100) comprenant une buse d'usinage laser (121) équipée pour éjecter un jet d'un jet de gaz de découpe sur la pièce (208), et la machine de découpe laser (200) comprenant en outre un réservoir de gaz du gaz de découpe pour alimenter en gaz de coupe la buse d'usinage laser (121), le gaz de coupe comprenant de l'oxygène, **caractérisée en ce qu'**il est prévu une mémoire, et **en ce que** l'unité de commande de machine (210) a accès à la mémoire, qui comprend des paramètres stockés de sorte que la machine de découpe laser soit équipée et programmée pour réaliser le procédé selon l'une quelconque des revendications précédentes.
